# EUROPÄISCHE PATENTANMELDUNG

(11) **EP 3 404 760 A1**
(43) Veröffentlichungstag der Anmeldung: **21.11.2018**
(21) Anmeldenummer: 18165589.5
(22) Anmeldetag: 04.04.2018
(51) Int. Cl.: H01M 8/1226, H01M 8/1286, H01M 4/86

(54) **BRENNSTOFFZELLENVORRICHTUNG**

(30) Priorität: 16.05.2017 DE 102017208222
(71) Anmelder: Robert Bosch GmbH, 70442 Stuttgart (DE)
(72) Erfinder: Matte, Eric, 70180 Stuttgart (DE); Lupetin, Piero, 70567 Stuttgart (DE)

(57) **Zusammenfassung**

Die Erfindung geht aus von einer Brennstoffzellenvorrichtung (10a; 10b), insbesondere Festoxidbrennstoffzellenvorrichtung, mit zumindest einer Funktionsschicht (12a, 14a, 16a; 12b, 14b, 16b) und mit zumindest einer Trägerschicht (18a; 18b), welche zumindest die Funktionsschicht (12a, 14a, 16a; 12b, 14b, 16b) trägt.

Es wird vorgeschlagen, dass zumindest ein Getter (20a; 20b) in zumindest einem Zustand dazu vorgesehen ist, zumindest ein aus der Trägerschicht (18a; 18b) austretendes Vergiftungselement zu binden.

## Beschreibung

### Stand der Technik

Es ist bereits eine Brennstoffzellenvorrichtung bekannt, welche zumindest eine Funktionsschicht und zumindest eine Trägerschicht aufweist, welche zumindest die Funktionsschicht trägt.

### Offenbarung der Erfindung

Die Erfindung geht aus von einer Brennstoffzellenvorrichtung, insbesondere Festoxidbrennstoffzellenvorrichtung, mit zumindest einer Funktionsschicht, insbesondere mehreren Funktionsschichten, und mit zumindest einer Trägerschicht, welche zumindest die Funktionsschicht trägt.

Es wird vorgeschlagen, dass die Brennstoffzellenvorrichtung zumindest einen, vorzugsweise mehrere, insbesondere verschiedene Getter aufweist, welcher/welche in zumindest einem Zustand dazu vorgesehen ist/sind, zumindest ein, vorzugsweise mehrere, insbesondere verschiedene aus der Trägerschicht austretendes Vergiftungselement/austretende Vergiftungselemente zu binden.

Vorteilhaft kann eine Effizienz, insbesondere eine Leistungseffizienz, der Brennstoffzellenvorrichtung verbessert werden. Insbesondere können Ablagerungen, Verunreinigungen in der Funktionsschicht durch Vergiftungselement verringert und vorteilhaft sogar vermieden werden. Hierdurch können insbesondere Leistungsverluste vorteilhaft verringert sogar vermieden werden. Ferner kann eine besonders kosteneffiziente Herstellung erreicht werden, da Funktionsschichten gemeinsam mit der Trägerschicht gesintert werden können, wobei eine Vergiftung der Funktionsschicht vermieden wird.

Unter einer "Brennstoffzellenvorrichtung" soll in diesem Zusammenhang insbesondere eine Vorrichtung zu einer stationären und/oder mobilen Gewinnung insbesondere elektrischer und/oder thermischer Energie verstanden werden. Die Brennstoffzelle kann insbesondere als eine planare Brennstoffzelle ausgebildet sein. Vorzugsweise ist die Brennstoffzelle als eine tubulare Brennstoffzelle ausgebildet. Unter einer "Funktionsschicht" soll in diesem Zusammenhang insbesondere eine Schicht verstanden werden, welche dazu vorgesehen ist, zumindest einen Transport entlang einer Phase, wie beispielsweise einer Elektrolytphase und/oder einer elektronisch leitenden Phase, der Brennstoffzelle zu beeinflussen. Die Funktionsschicht wird zumindest teilweise durch einen Umformprozess, insbesondere durch Prägen, und/oder einen Urformprozess, insbesondere durch Gießen, Drucken und/oder Extrudieren, hergestellt.. Insbesondere weist die Brennstoffzellenvorrichtung mehrere Funktionsschichten auf, welche insbesondere zumindest teilweise ein Funktionsschichtpaket der Brennstoffzellenvorrichtung ausbilden, wobei zumindest eine Funktionsschicht, vorzugsweise zwei Funktionsschichten, als Elektrodenschichten, insbesondere als eine Anodenschicht und/oder eine Kathodenschicht, ausgebildet sind und/oder zumindest eine Funktionsschicht als eine Elektrolytschicht ausgebildet ist, welche insbesondere zwischen den weiteren Funktionsschichten angeordnet ist, diese vorzugsweise kontaktiert und besonders bevorzugt mit diesen stoffschlüssig verbunden ist. Die Elektrolytschicht besteht insbesondere zumindest teilweise, vorzugsweise zumindest zu einem Großteil und besonders bevorzugt vollständig aus einer Keramik, insbesondere aus yttriumstabilisiertem Zirconiumoxid (YSZ), aus scandiumstabilisiertem Zirconiumoxid (ScSZ) und/oder aus gadoliniumdotiertem Ceroxid (CGO). Die Anodenschicht besteht insbesondere zumindest teilweise, vorzugsweise zumindest zu einem Großteil und besonders bevorzugt vollständig, aus einem Verbundwerkstoff, insbesondere aus einem Verbundstoff von Nickel und yttriumstabilisiertem Zirconiumoxid. Die Kathodenschicht besteht insbesondere zumindest teilweise, vorzugsweise zumindest zu einem Großteil und besonders bevorzugt vollständig aus einem Perowskitmaterial, wie beispielsweise Lanthan-Strontium-Manganoxid (LSM) und/oder eine Mischung von Lanthanum-Strontium-Manganoxid und yttriumstabilisiertem Zirconiumoxidund/oder Lanthan-Strontium-Eisenoxid und/oder Lanthan-Strontium-Kobalt-Eisenoxid und/oder Lanthan-Nickel-Eisenoxid und/oder eine Mischung von Lanthan-Strontium-Kobalt-Eisenoxid und gadoliniumdotiertes Ceroxid gebildet. Vorzugsweise ist die Kathodenschicht aus Lanthan-Strontium-Manganoxid, welches die chemische Summenformel (La₁-ySry)_{z}MnO3 aufweist, wobei *y* insbesondere Werte zwischen 0,05 und 0,50 annimmt und wobei z insbesondere Werte zwischen 0.95 und 1.05 annimmt. Unter dem Ausdruck "zumindest zu einem Großteil" sollen dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % verstanden werden. Die Trägerschicht ist insbesondere dazu vorgesehen, das Funktionsschichtpaket zu tragen. Die Trägerschicht weist insbesondere Forsterit (Mg₂SiO₄), insbesondere zinkdotierten Forsterit ((Mg,Zn)₂SiO₄), auf. Die Trägerschicht wird insbesondere durch einen Spritzgießprozess hergestellt. Die Funktionsschicht, vorzugsweise das Funktionsschichtpaket, ist insbesondere stoffschlüssig mit der Trägerschicht verbunden. Insbesondere kann die Funktionsschicht, vorzugsweise das Funktionsschichtpaket, auf die Trägerschicht aufgedruckt, insbesondere mittels eines Transferpapiers und vorzugsweise anschließender Lamination, werden. Zudem ist denkbar, dass die Träger schicht auf die Funktionsschicht durch Spritzguss aufgebracht werden kann. Ferner werden die Trägerschicht und die Funktionsschicht, vorzugsweise das Funktionsschichtpaket, insbesondere nachdem diese mit der Trägerschicht verbunden wurden, zusammen co-gesintert. Unter einem "Vergiftungselement" soll insbesondere ein chemisches Element verstanden werden, welches, insbesondere durch Diffusionsprozesse erzeugte, Ablagerungen, Verunreinigungen, Degradationen oder dergleichen, eine Funktionalität der Funktionsschicht verschlechtert. Beispielsweise kann ein Vergiftungselement, insbesondere für den Fall einer Ausgestaltung der Funktionsschicht als Elektrodenschicht, vorzugsweise Kathodenschicht und/oder Anodenschicht sowie insbesondere als Elektrolytschicht, einen Elektronenfluss und/oder eine elektrochemische Reaktion verringern und/oder behindern. Bei dem Vergiftungselement kann es sich beispielsweise um Zink, Magnesium, Silizium oder dergleichen handeln. Das Vergiftungselement ist insbesondere ein Element der Trägerschicht, welches in zumindest einem Zustand aus der Trägerschicht in die Funktionsschicht, vorzugsweise das Funktionsschichtpaket, diffundiert. Unter einem "Getter" soll insbesondere ein Element verstanden werden, welches dazu vorgesehen ist, in zumindest einen Zustand zumindest ein Vergiftungselement chemisch, insbesondere durch eine chemische Reaktion, und/oder physikalisch, insbesondere durch lonenaustausch, Van-der Waals-Wechselwirkungen oder dergleichen, zu binden. Vorzugsweise bilden der Getter und insbesondere ein Gettermaterial des Getters eine stabile Phase mit zumindest einem Vergiftungselement aus. Insbesondere ist der Getter dazu vorgesehen, eine Reaktion des Vergiftungselements mit der Funktionsschicht, insbesondere dem Funktionsschichtpaket, zu unterbinden. Der Getter weist zumindest ein Gettermaterial, insbesondere mehrere vorzugsweise verschieden ausgebildete Gettermaterialien auf. Vorzugsweise weist der Getter zumindest ein Gettermaterial auf, welches als zumindest ein Feststoffoxid ausgebildet ist. Besonders bevorzugt weist der Getter zumindest ein Gettermaterial auf, welches ausgebildet ist als Aluminiumoxid (Al₂O₃), Ceroxid (CeO₂) Strontiumoxid (SrO), Lanthanoxid (La₂O₃), Yttriumoxid (Y₂O₃), Calciumoxid (CaO) und/oder mit Gadoliniumoxid (Gd₂O₃) dotiertes Ceroxid (CeO₂).

Ferner wird vorgeschlagen, dass der Zustand ein Hochtemperaturzustand ist, welcher insbesondere während einer Herstellung der Brennstoffzellenvorrichtung auftritt. Unter einem "Hochtemperaturzustand" soll insbesondere ein Zustand verstanden werden, in welchem zumindest die Trägerschicht und insbesondere die Funktionsschicht, vorzugsweise das Funktionsschichtpaket, mit einer Temperatur von zumindest 800 °C, vorzugsweise von zumindest 1000 °C und besonders bevorzugt von zumindest 1150 °C und/oder insbesondere höchstens 1600 °C, vorzugsweise höchstens 1400°C und besonders bevorzugt höchstens 1250 °C beaufschlagt werden. Der Hochtemperaturzustand ist insbesondere ein Zustand, in welchem die Trägerschicht und/oder die Funktionsschicht, insbesondere das Funktionsschichtpaket, vorzugsweise gemeinsam, gesintert werden. Hierdurch kann ein Herstellungsprozess vereinfacht werden, insbesondere da die Trägerschicht und die Funktionsschicht, insbesondere das Funktionsschichtpaket, gemeinsam gesintert werden können, wobei vermieden wird, dass durch Diffusion Vergiftungselement aus der Trägerschicht in die Funktionsschicht, insbesondere das Funktionsschichtpaket, gelangt.

Ferner wird vorgeschlagen, dass der Getter zumindest ein unspezifisches Gettermaterial aufweist, welches dazu vorgesehen ist, verschiedene Vergiftungselemente, vorzugsweise verschiedener Vergiftungselementarten, zu binden. Insbesondere kann der Getter mehrere verschiedene unspezifische Gettermaterialien aufweisen. Besonders vorteilhaft weist der Getter als ein unspezifisches Gettermaterial Aluminiumoxid (Al₂O₃) auf. Insbesondere ist das unspezifische Gettermaterial dazu vorgesehen, verschiedene Vergiftungselemente, wie beispielsweise Zink, Magnesium, Silizium oder dergleichen, zu binden. Vorteilhaft kann eine umfangreiche und/oder effiziente Bindung vieler verschiedener Vergiftungselemente erreicht werden. Insbesondere um eine Präzision einer Bindung von Vergiftungselemente zu verbessern, kann der Getter alternativ oder zusätzlich zumindest ein spezifisches Gettermaterial aufweisen, welches dazu vorgesehen ist, ein Vergiftungselement, insbesondere ein einziges Vergiftungselementart, vorzugsweise eine Vergiftungselementart und besonders bevorzugt eine einzige Verbindungselementart zu binden. Insbesondere kann der Getter mehrere verschiedene spezifische Gettermaterialien aufweisen. Vorteilhaft weist der Getter zumindest ein spezifisches Gettermaterial auf, welches ausgebildet ist als Ceroxid (CeO₂) Strontiumoxid (SrO), Lanthanoxid (La₂O₃), Yttriumoxid (Y₂O₃), Calciumoxid (CaO) und/oder mit Gadoliniumoxid (Gd2O3) dotiertes Ceroxid (CeO₂).

Ferner wird vorgeschlagen, dass der Getter zumindest teilweise, vorzugsweise zumindest zu einem Großteil und besonders bevorzugt vollständig eine Getterschicht ausbildet, welche zumindest teilweise zwischen der Trägerschicht und der Funktionsschicht, welche insbesondere als eine Kathodenschicht ausgebildet ist, angeordnet ist. Die Getterschicht wird zumindest teilweise durch einen Umformprozess, insbesondere durch Prägen, und/oder einen Urformprozess, insbesondere durch Gießen, Drucken und/oder Extrudieren, hergestellt. Die Getterschicht ist zumindest aus einem, vorzugsweise mehreren Gettermaterialien sowie insbesondere aus Forsterit ausgebildet. Hierdurch kann eine Effizienz einer Vergiftungselementbindung verbessert werden, da das Vergiftungselement erst durch die gesamte Getterschicht diffundieren muss und dort gebunden wird, bevor es zur Funktionsschicht gelangen kann.

Ferner wird vorgeschlagen, dass der Getter zumindest teilweise, insbesondere zumindest zu einem Großteil und besonders bevorzugt vollständig in der Funktionsschicht, insbesondere dem Funktionsschichtpaket, angeordnet ist. Besonders bevorzugt ist der Getter in der Funktionsschicht angeordnet, welche als eine Kathodenschicht ausgebildet ist. Alternativ oder zusätzlich kann der Getter zumindest teilweise in der Trägerschicht, insbesondere in einem Nahbereich der Oberfläche der Trägerschicht, auf welcher insbesondere die Funktionsschicht angeordnet ist, angeordnet sein. Hierdurch kann eine besonders homogene Bindung von Vergiftungselementen stattfinden. Ferner kann vermieden werden, dass ein Fließwiderstand, insbesondere durch Einbringen zusätzlicher Schichten, erhöht wird.

Ferner wird vorgeschlagen, dass der Getter zumindest 1 % und höchstens 20 % zu einer Gesamtmasse der Funktionsschicht beiträgt. Ferner wird vorgeschlagen, dass der Getter zumindest ein Gettermaterial umfasst, welches Partikel eines mittleren Durchmessers von zumindest 0,1 µm und von höchstens 10 µm aufweist. Vorteilhaft kann hierdurch eine Gesamtoberfläche von Gettermaterial, welches das Vergiftungselement bindet, erhöht werden. Insbesondere kann ein effizienter Fluss durch die Funktionsschicht erreicht werden. Alternativ oder zusätzlich kann der Getter zumindest ein Gettermaterial aufweisen, welches als Agglomerat vorliegt. Hierdurch kann eine besonders stabile Anlagerung des Gettermaterials, insbesondere in der Funktionsschicht, erreicht werden.

In einem weiteren Aspekt der Erfindung wird ein Verfahren zur Herstellung einer Brennstoffzellenvorrichtung vorgeschlagen, wobei in zumindest einem Verfahrensschritt ein Getter eingebracht wird, welcher dazu vorgesehen ist, in zumindest einem Zustand zumindest ein aus einer Trägerschicht austretendes Vergiftungselement zu binden. Vorteilhaft kann eine Effizienz, insbesondere eine Kosteneffizienz der Brennstoffzellenvorrichtung verbessert werden Ferner kann eine besonders kosteneffiziente Herstellung erreicht werden, da Funktionsschichten gemeinsam mit der Trägerschicht gesintert werden können, wobei eine Vergiftung der Funktionsschicht vermieden wird.

Die erfindungsgemäße Brennstoffzellenvorrichtung sowie das Verfahren zu Herstellung der Brennstoffzelle sollen hierbei nicht auf die oben beschriebene Anwendung und Ausführungsform beschränkt sein. Insbesondere können die erfindungsgemäße Brennstoffzellenvorrichtung sowie das Verfahren zur Herstellung der Brennstoffzelle zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Brennstoffzelle mit einer Brennstoffzellenvorrichtung in einer schematischen Darstellung,
- Fig. 2: einen Teil der Brennstoffzellenvorrichtung in einer Schnittdarstellung,
- Fig. 3: einen schematischen Ablaufplan eines Verfahrens zur Herstellung der Brennstoffzellenvorrichtung und
- Fig. 4: einen Teil einer alternativ ausgestalteten Brennstoffzellenvorrichtung in einer Schnittdarstellung.

### Beschreibung der Ausführungsbeispiele

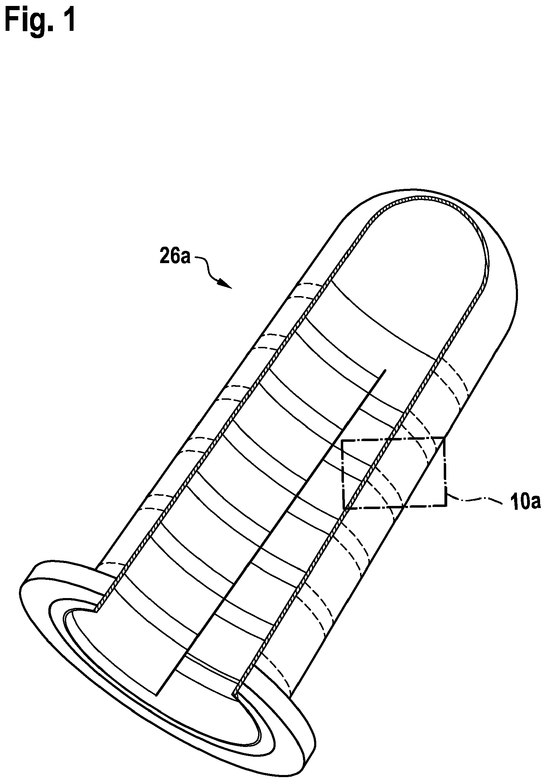

In der Figur 1 ist eine Brennstoffzelle 26a, die insbesondere als Feststoffoxidbrennstoffzelle ausgebildet ist, in einer schematischen Darstellung gezeigt. Im vorliegenden Fall ist die Brennstoffzelle 26a als eine tubulare Brennstoffzelle ausgebildet. Alternativ könnte die Brennstoffzelle 26a auch als eine planare Brennstoffzelle ausgebildet sein. Die Brennstoffzelle 26a weist eine Brennstoffzellenvorrichtung 10a auf.

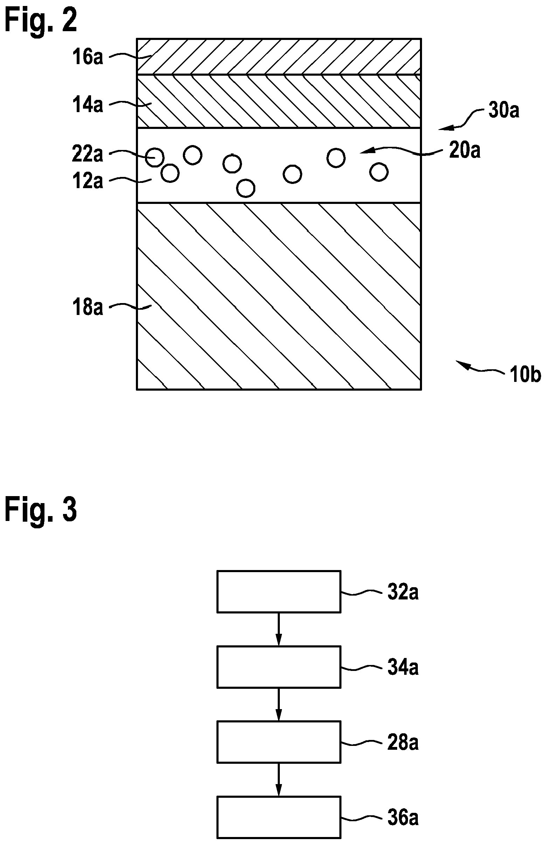

In Figur 2 ist ein Schnitt durch einen Teil der Brennstoffzellenvorrichtung 10a dargestellt. Die Brennstoffzellenvorrichtung 10a weist ein Funktionsschichtpaket 30a auf. Das Funktionsschichtpaket 30a umfasst zumindest eine Funktionsschicht 12a, 14a, 16a. Im vorliegenden Fall umfasst das Funktionsschichtpaket 30a drei Funktionsschichten 12a, 14a, 16a. Das Funktionsschichtpaket 30a kann eine von der hier gezeigten Anzahl abweichende Anzahl von Funktionsschichten 12a, 14a, 16a aufweisen.

Das Funktionsschichtpaket 30a weist eine Funktionsschicht 12a auf. Die Funktionsschicht 12a ist im vorliegenden Fall als eine Elektrodenschicht, und zwar insbesondere als eine Kathodenschicht, ausgebildet. Die Funktionsschicht 12a besteht vorzugsweise zumindest teilweise aus Lanthan-Strontium-Manganoxid (LSM) und/oder eine Mischung von Lanthanum-Strontium-Manganoxid und yttriumstabilisiertem Zirconiumoxidund/oder Lanthan-Strontium-Eisenoxid und/oder Lanthan-Strontium-Kobalt-Eisenoxid und/oder Lanthan-Nickel-Eisenoxid und/oder eine Mischung von Lanthan-Strontium-Kobalt-Eisenoxid und gadoliniumdotiertes Ceroxid gebildet. Vorzugsweise ist die Kathodenschicht aus Lanthan-Strontium-Manganoxid, welches die chemische Summenformel (La₁ySry)_{z}MnO3 aufweist, wobei *y* insbesondere Werte zwischen 0,05 und 0,50 annimmt und wobei z insbesondere Werte zwischen 0.95 und 1.05 annimmt.

Das Funktionsschichtpaket 30a umfasst eine weitere Funktionsschicht 16a. Die weitere Funktionsschicht 16a ist im vorliegenden Fall als Elektrodenschicht, und zwar insbesondere als eine Anodenschicht, ausgebildet. Die weitere Funktionsschicht 16a besteht zumindest teilweise aus einer Keramik, und zwar insbesondere aus einem Verbundstoff von Nickeloxid und yttriumstabilisiertem Zirconiumoxid und/oder aus einem Verbundstoff von Nickeloxid und Ceroxid und/oder gadoliniumdotiertem Ceroxid.

Das Funktionsschichtpaket 30a umfasst eine zusätzliche Funktionsschicht 14a. Die zusätzliche Funktionsschicht 14a ist im vorliegenden Fall als eine Elektrolytschicht ausgebildet. Die zusätzliche Funktionsschicht 14a besteht zumindest teilweise aus einer Keramik, insbesondere aus yttriumstabilisiertem Zirconiumoxid (YSZ). Alternativ oder zusätzlich kann die zusätzliche Funktionsschicht 14a zumindest teilweise aus scandiumstabilisiertem Zirconiumoxid (ScSZ) und/oder gadoliniumdotiertem Ceroxid (CGO) bestehen.

Die Funktionsschicht 12a ist in Kontakt mit der zusätzlichen Funktionsschicht 14a. Die weitere Funktionsschicht 16a ist in Kontakt mit der zusätzlichen Funktionsschicht 14a. Die zusätzliche Funktionsschicht 14a ist zwischen der Funktionsschicht 12a und der weiteren Funktionsschicht 16a angeordnet. Die Funktionsschicht 12a ist stoffschlüssig mit der zusätzlichen Funktionsschicht 14a verbunden. Die weitere Funktionsschicht 16a ist stoffschlüssig mit der zusätzlichen Funktionsschicht 14a verbunden.

Ferner weist die Brennstoffzellenvorrichtung 10a eine Trägerschicht 18a auf. Die Trägerschicht 18a trägt zumindest eine Funktionsschicht 12a. Im vorliegenden Fall trägt die Trägerschicht 18a das gesamte Funktionsschichtpaket 30a. Die Trägerschicht 18a ist mit dem Funktionsschichtpaket 30a in Kontakt. Die Trägerschicht 18a ist mit der Funktionsschicht 12a in Kontakt. Die Trägerschicht 18a ist mit dem Funktionsschichtpaket 30a stoffschlüssig verbunden. Die Trägerschicht 18a ist stoffschlüssig mit der Funktionsschicht 12a verbunden. 30. Die Trägerschicht 18a weist zumindest Forsterit, insbesondere mit Zink dotierten Forsterit ((Mg,Zn)₂SiO₄), auf. In der Trägerschicht 18a ist zumindest ein Vergiftungselement enthalten. Durch Diffusionsprozesse erzeugt das Vergiftungselement zumindest an der Funktionsschicht 12a, insbesondere in dem gesamten Funktionsschichtpaket 30a, Ablagerungen, Verunreinigungen, Degradationen oder dergleichen. Dies führt zu einer Verschlechterung einer Funktionalität der Funktionsschicht 12a, insbesondere der gesamten Funktionsschichtpakets 30a. Bei der vorliegenden Ausgestaltung der Funktionsschicht 12a als Kathodenschicht verringern und/oder behindert das Vergiftungselement einen Elektronenfluss und/oder eine elektrochemische Reaktion. Das Vergiftungselement kann als Zink, Magnesium, Silizium oder dergleichen ausgebildet sein.

Um das Vergiftungselement zu binden, weist die Brennstoffzellenvorrichtung 10a zumindest einen Getter 20a auf. Der Getter 20a ist in zumindest einem Zustand, insbesondere in einem Hochtemperaturzustand, dazu vorgesehen, zumindest ein, vorzugsweise mehrere, insbesondere verschiedene, aus der Trägerschicht 18a austretendes Vergiftungselement/austretende Vergiftungselemente zu binden. Der Getter 20a reagiert chemisch mit dem Vergiftungselement. Vorzugsweise bildet in dem Getter 20a enthaltenes Gettermaterial 22a eine einheitliche Phase mit dem Vergiftungselement/Vergiftungselementen aus.

Der Getter 20a weist das zumindest eine Gettermaterial 22a auf. Im vorliegenden Fall ist das Gettermaterial 22a als ein unspezifisches Gettermaterial 22a ausgebildet. Das Gettermaterial 22a ist Aluminiumoxid (Al₂O₃). Das unspezifische Gettermaterial 22a ist dazu vorgesehen, verschiedene Vergiftungselemente, wie beispielsweise Zink, Magnesium, Silizium oder dergleichen, zu binden. Ferner kann der Getter 20a mehrere, insbesondere verschieden ausgebildete Gettermaterialien aufweisen. Alternativ oder zusätzlich zu dem unspezifischen Gettermaterial 22a ist denkbar, dass der Getter 20a zumindest ein als ein spezifisches Gettermaterial ausgebildetes Gettermaterial aufweist. Das spezifische Gettermaterial ist dazu vorgesehen, lediglich ein, insbesondere genau ein Vergiftungselement, vorzugsweise einer einzigen Vergiftungselementart, zu binden. Das spezifische Gettermaterial kann als Ceroxid (CeO₂) Strontiumoxid (SrO), Lanthanoxid (La₂O₃), Yttriumoxid (Y2O3a), Calciumoxid (CaO) und/oder als mit Gadoliniumoxid (Gd₂O₃) dotiertes Ceroxid (CeO₂) ausgebildet sein.

Der Getter 20a ist zumindest teilweise in der Funktionsschicht 12a, insbesondere dem Funktionsschichtpaket 30a, angeordnet. Im vorliegenden Fall ist der Getter 20a vollständig in der Funktionsschicht 12a angeordnet. Das Gettermaterial 22a des Getters 20a trägt zu zumindest 1 % und zu höchstens 20 % zu einer Gesamtmasse der Funktionsschicht 12a bei. Das Gettermateriel 22a des Getters 20a umfasst Partikel eines mittleren Durchmessers von zumindest 0,1 µm und höchstens 10 µm. Alternativ oder zusätzlich kann der Getter 20a zumindest teilweise in der Trägerschicht 18a, insbesondere in einem Nahbereich der Oberfläche der Trägerschicht 18a, auf welcher insbesondere die Funktionsschicht 12a angeordnet ist, angeordnet sein. Ferner ist es auch denkbar, dass der Getter 20a zumindest teilweise eine Getterschicht aufweist, welche insbesondere zwischen der Trägerschicht 18a und der Funktionsschicht 12a, insbesondere dem Funktionsschichtpaket 30a, angeordnet sein kann. Denkbar ist, dass das Gettermaterial 22a als Agglomerat vorliegt.

In Figur 3 ist ein schematischer Ablaufplan eines Verfahrens zur Herstellung der Brennstoffzellenvorrichtung 10a dargestellt.

Das Verfahren umfasst einen Verfahrensschritt 32a. In dem Verfahrensschritt 32a wird die Trägerschicht 18a hergestellt. Die Trägerschicht 18a wird durch Spritzgießen hergestellt.

Das Verfahren umfasst einen weiteren Verfahrensschritt 34a. In dem weiteren Verfahrensschritt 34a wird die Funktionsschicht 12a, insbesondere das Funktionsschichtpaket 30a hergestellt. Die Funktionsschicht 12a, insbesondere das Funktionsschichtpaket 30a, wird gedruckt. Die Funktionsschicht 12a, insbesondere das Funktionsschichtpaket 30a, wird auf die Trägerschicht 18a aufgedruckt. Ferner könnte die Funktionsschicht 12a, insbesondere das Funktionsschichtpaket 30a, durch einen Umformprozess, insbesondere durch Prägen, und/oder einen Urformprozess, insbesondere durch Gießen und/oder Extrudieren, hergestellt und/oder auf die Trägerschicht 18a aufgebracht werden.

Das Verfahren weist einen weiteren Verfahrensschritt 28a auf. In dem Verfahrensschritt 28a wird der Getter 20a eingebracht. Im vorliegenden Fall bildet der Getter 20a zumindest teilweise die Funktionsschicht 12a, insbesondere das Funktionsschichtpaket 30a, aus. Alternativ ist es denkbar, dass der Getter 20a eine separate Getterschicht ausbildet, welche zwischen der Trägerschicht 18a und der Funktionsschicht 12a eingebracht wird.

Das Verfahren umfasst einen weiteren Verfahrensschritt 36a. In dem weiteren Verfahrensschritt 36a wird die Brennstoffzellenvorrichtung 10a mit Hochtemperatur beaufschlagt. Die Trägerschicht 18a, die Funktionsschicht 12a, insbesondere das Funktionsschichtpaket 30a, und/oder der Getter 20a, insbesondere die Getterschicht, werden vorteilhaft gemeinsam gesintert. Dazu werden diese mit einer Temperatur von zumindest 1150 °C und/oder höchstens 1350 °C beaufschlagt werden. Bei dem Sinterungsprozess treten aus der Trägerschicht 18a das Vergiftungselement aus, welches von dem Getter 20a gebunden wird und somit nicht die Funktionsschicht 12a, insbesondere das Funktionsschichtpaket 30a, vergiften kann.

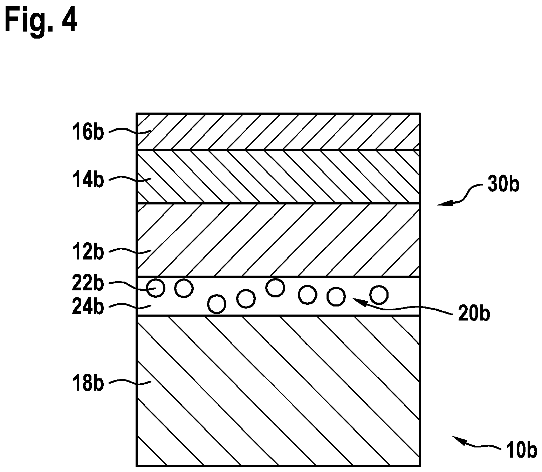

Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels der Figuren 1 bis 3 verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figur 4 ist der Buchstabe a durch den Buchstaben b ersetzt.

In Figur 4 ist ein Teil einer alternativen Ausgestaltung einer Brennstoffzellenvorrichtung 10b in einer Schnittansicht dargestellt.
Die Brennstoffzellenvorrichtung 10b weist eine Trägerschicht 18b auf. Ferner weist die Brennstoffzellenvorrichtung 10b ein Funktionsschichtpaket 30b auf. Das Funktionsschichtpaket 30b weist eine Funktionsschicht 12b, eine weitere Funktionsschicht 16b und eine zusätzliche Funktionsschicht 14b auf. Zudem weist die Brennstoffzellenvorrichtung 10b einen Getter 20b auf. Im vorliegenden Fall bildet der Getter 20b zumindest teilweise eine Getterschicht 24b aus. Die Getterschicht 24b besteht zumindest teilweise aus einem Gettermaterial 22b. Ferner kann die Getterschicht zumindest teilweise aus Forsterit oder LSM und/oder YSZ bestehen. Die Getterschicht 24b ist in Kontakt mit der Trägerschicht 18b. Die Getterschicht 24b ist in Kontakt mit der Funktionsschicht 12b, insbesondere mit dem Funktionsschichtpaket 30b. Die Getterschicht 24b ist stoffschlüssig mit der Trägerschicht 18b verbunden. Die Getterschicht 24b ist stoffschlüssig mit der Funktionsschicht 12b, insbesondere dem Funktionsschichtpaket 30b, verbunden. Ferner ist denkbar, dass die Getterschicht 24b Teil des Funktionsschichtpakets 30b ist.

Der Getter 20b, insbesondere die Getterschicht 24b, kann durch Drucken hergestellt werden und vorteilhaft auf die Trägerschicht 18b aufgedruckt werden. Alternativ kann der Getter 20b, insbesondere die Getterschicht 24b, durch einen Umformprozess, insbesondere durch Prägen, und/oder einen Urformprozess, insbesondere durch Gießen und/oder Extrudieren und/oder Siebgedruck, hergestellt und insbesondere auf die Trägerschicht 18b aufgebracht werden.

## Patentansprüche

1. Brennstoffzellenvorrichtung (10a; 10b), insbesondere Festoxidbrennstoffzellenvorrichtung, mit zumindest einer Funktionsschicht (12a, 14a, 16a; 12b, 14b, 16b) und mit zumindest einer Trägerschicht (18a; 18b), welche zumindest die Funktionsschicht (12a, 14a, 16a; 12b, 14b, 16b) trägt, **gekennzeichnet durch** zumindest einen Getter (20a; 20b), welcher in zumindest einem Zustand dazu vorgesehen ist, zumindest ein aus der Trägerschicht (18a; 18b) austretendes Vergiftungselement zu binden.

2. Brennstoffzellenvorrichtung (10a; 10b) nach Anspruch 1, **dadurch gekennzeichnet, dass** der Zustand ein Hochtemperaturzustand, insbesondere ein Sinterzustand, ist.

3. Brennstoffzellenvorrichtung (10a; 10b) nach Anspruch 1 oder 2, **dadurch gekennzeichnet, dass** der Getter (20a; 20b) zumindest ein unspezifisches Gettermaterial (22a; 22b) aufweist, welches dazu vorgesehen ist, verschiede Vergiftungselementen aufzunehmen

4. Brennstoffzellenvorrichtung (10a; 10b) nach einem der vorhergehenden Ansprüche, **dadurch gekennzeichnet, dass** der Getter (20a; 20b) als ein Gettermaterial (22a; 22b) Aluminiumoxid (Al₂O₃) aufweist.

5. Brennstoffzellenvorrichtung (10a; 10b) nach einem der vorhergehenden Ansprüche, **dadurch gekennzeichnet, dass** der Getter (20a; 20b) zumindest teilweise eine Getterschicht (24b) ausbildet, welche zumindest teilweise zwischen der Trägerschicht (18b) und der Funktionsschicht (12b, 14b, 16b) angeordnet ist.

6. Brennstoffzellenvorrichtung (10a; 10b) nach einem der vorhergehenden Ansprüche, **dadurch gekennzeichnet, dass** der Getter (20a) zumindest teilweise in der Funktionsschicht (12a, 14a, 16a) angeordnet ist.

7. Brennstoffzellenvorrichtung (10a; 10b) nach Anspruch 6, **dadurch gekennzeichnet, dass** der Getter (20a) zumindest 1 % und höchstens 20 % zu einer Gesamtmasse der Funktionsschicht (12a, 14a, 16a) beiträgt.

8. Brennstoffzellenvorrichtung (10a; 10b) nach einem der vorhergehenden Ansprüche, **dadurch gekennzeichnet, dass** der Getter (20a; 20b) zumindest ein Gettermaterial (22a; 22b) umfasst, welches Partikel eines mittleren Durchmessers von zumindest 0,1 µm und höchstens 10 µm aufweist.

9. Brennstoffzelle (26a; 26b), insbesondere Festoxidbrennstoffzelle, mit zumindest einer Brennstoffzellenvorrichtung nach einem der vorhergehenden Ansprüche.

10. Verfahren zur Herstellung einer Brennstoffzellenvorrichtung (10a; 10b) nach einem der Ansprüche 1 bis 8, **dadurch gekennzeichnet, dass** in zumindest einem Verfahrensschritt (28a) ein Getter (20a; 20b) eingebracht wird, welcher dazu vorgesehen ist, in zumindest einem Zustand zumindest ein aus einer Trägerschicht (18a; 18b) austretendes Vergiftungselement zu binden.
